**Europäisches Patentamt**

(19) **European Patent Office**

**Office européen des brevets**

(11) Publication number : **0 425 454 B1**

(12) **EUROPEAN PATENT SPECIFICATION**

(45) Date of publication of patent specification :
14.04.93 Bulletin 93/15

(51) Int. Cl.⁵ : **B60H 1/00,** G05D 23/20

(21) Application number : **90830471.0**

(22) Date of filing : **23.10.90**

(54) **A system for controlling the heating of the passenger compartment of a motor vehicle.**

(30) Priority : **25.10.89 IT 6792089**

(43) Date of publication of application :
**02.05.91 Bulletin 91/18**

(45) Publication of the grant of the patent :
**14.04.93 Bulletin 93/15**

(84) Designated Contracting States :
**DE ES FR GB SE**

(56) References cited :
**DE-A- 2 930 747**
**DE-A- 3 142 643**
**FR-A- 2 423 811**
**FR-A- 2 483 578**
**GB-A- 2 019 616**

(73) Proprietor : **MARELLI AUTRONICA S.p.A.**
**Via Griziotti 4**
**I-20145 Milano (IT)**

(72) Inventor : **Serraglio, Aldo**
**Via Tasso 18**
**I-10093 Collegno (Torino) (IT)**

(74) Representative : **Quinterno, Giuseppe et al**
**c/o Jacobacci-Casetta & Perani S.p.A. Via**
**Alfieri, 17**
**I-10121 Torino (IT)**

EP 0 425 454 B1

## Description

The present invention relates to a system for controlling the heating of the passenger compartment of a motor vehicle.

More specifically, the invention relates to a system comprising:
a liquid-air heat-exchanger adapted to receive a flow of heated liquid from the engine cooling system of the vehicle and to transfer heat to an air flow to be admitted to the passenger compartment,
a solenoid valve for controlling the flow of liquid through the heat-exchanger,
setting means which can be operated manually by the user to generate an electrical reference signal indicative of the desired temperature of the passenger compartment,
temperature sensor means for supplying electrical signals indicative of the temperature of the heated air output by the exchanger, and
an electronic control unit arranged to pilot the solenoid valve in an ON-OFF mode, in a predetermined manner, in dependence on the temperature detected by the sensor means, the electronic unit being arranged in particular:
periodically to calculate a reference temperature value for the air output by the exchanger, as a predetermined function of the desired temperature set by the user, and
to alter the time for which the solenoid valve is opened or closed in dependence on the difference between the measured temperature of the air output by the exchanger and the calculated reference temperature value. Such a system is known, e.g. from GB-A-2.019.616.

In order to eliminate the annoying instabilities which may arise in known systems of the type specified above, the object of the invention is to provide a system of that type whose main characteristic lies in the fact that the electronic control unit is arranged:
to store, for each cycle, the difference between the measured temperature of the air output by the exchanger and the calculated reference temperature,
to calculate a temperature-error parameter by a predefined linear combination of the values assumed by that difference during the current cycle and during the immediately preceding cycle, and
to alter the time for which the solenoid valve is opened or closed, in a predefined manner, in dependence on the error parameter.

Further characteristics and advantages of the invention will become clear from the detailed description which follows, with reference to the appended drawings, provided purely by way of non-limiting example, in which:

Figure 1 is a partial block diagram of a system according to the invention, and
Figure 2 is a flow chart showing the way in which the control unit of the system pilots the solenoid valve.

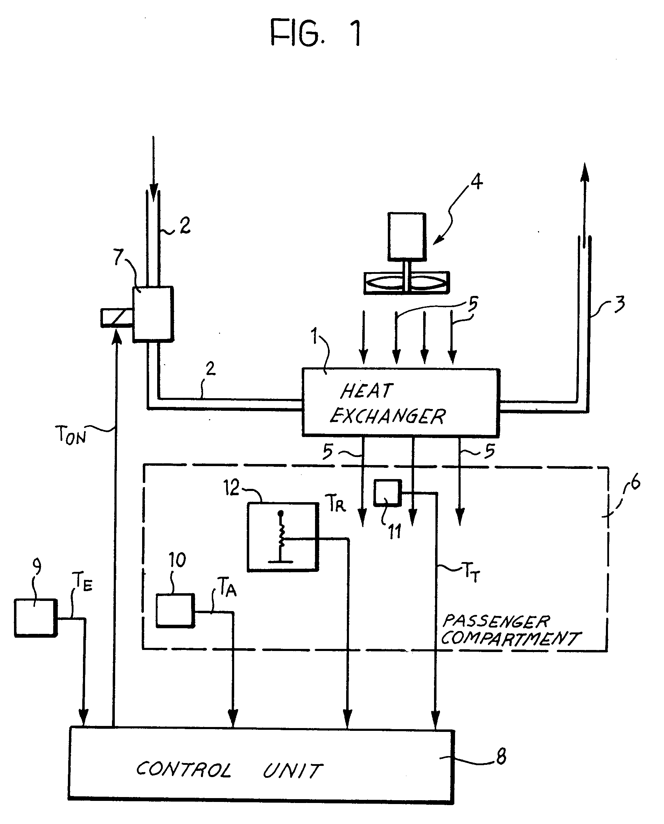

With reference to Figure 1, a system for controlling the heating of the passenger compartment of a motor vehicle includes a liquid-air heat-exchanger 1 which receives a flow of heated liquid from the engine cooling system (not shown) of the vehicle through pipes 2 and 3.

An electric fan 4 sends an air flow 5 through the exchanger 1 and the air thus heated is admitted to the passenger compartment 6 of the vehicle.

A solenoid valve 7 is interposed in the pipe 2 and controls the flow of liquid to the heat-exchanger 1.

A electronic control unit, generally indicated 8, is connected to three temperature sensors 9, 10 and 11 which, in operation, supply it with electrical signals indicative of the temperature $T_E$ outside the passenger compartment 6, the temperature $T_A$ inside the passenger compartment and the temperature $T_T$ of the heated air output by the heat-exchanger 1.

A setting device 12, which is operable manually by the user, is also connected to the control unit 8 for generating an electrical reference signal indicative of the desired temperature $T_R$ of the passenger compartment 6. This setting device may be constituted, for example, by a potentiometer with a translatable or rotatable slider.

The electronic unit 8, which may be formed with the use of a microprocessor, is arranged to pilot the solenoid valve 7 in an ON-OFF mode, in a predetermined manner, in dependence on the temperatures detected with the sensors 9, 10 and 11 and the desired temperature set by the user by means of the device 12.

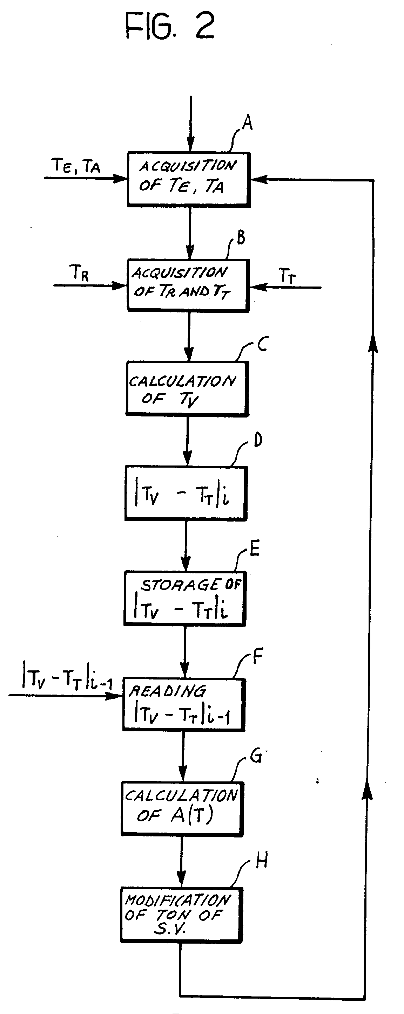

Specifically, the unit 8 is arranged cyclically to acquire the values assumed by the signals output by the sensors 9, 10 and 11 and by the setting device 12 respectively (boxes A and B of Figure 2).

The unit 8 is also arranged, on the basis of the values of the signals thus acquired, to calculate a reference temperature $T_V$ for the air output by the heat exchanger 11, as a predetermined function of the temperatures $T_E$, $T_A$ and $T_T$ indicated by the sensors 9 to 11 and of the desired temperature $T_R$ set by the user (box C of Figure 2).

The reference temperature may be calculated, for example, according to the following equation:
$$T_V = T_A + k1(T_A - T_E) + k2(T_R - T_E) \quad (1)$$
in which k1 and k2 are constants.

In each calculation cycle, the unit 8 calculates the difference between the temperature $T_T$ of the air output by the exchanger 1 and the reference temperature $T_V$ calculated. That difference is stored (boxes D and E in Figure 2).

The unit 8 then calculates (boxes F and G) a temperature-error parameter A(T) according to a predefined linear combination of the values assumed by the difference $T_V - T_T$ during the current cycle (the ith

2

cycle) and the immediately preceding cycle (the i-1th cycle), for example, according to the following equation:

$$A(T) = k_p.E_i - k_d.(E_{i-1} - E_i)$$
$$= k_p.[T_V - T_T]_i - k_d([T_V - T_T]_{i-1} - [T_V - T_T]_i)$$
$$(2)$$

in which $k_p$ and $k_d$ are positive constants.

The unit opens the solenoid valve 7 for a period of time corresponding to the resulting value of the temperature-error parameter A(T). In particular, the solenoid valve may be piloted in an ON-OFF mode having a fixed period of, for example, 5 seconds, with an open time ("ON" time $T_{on}$) which is variable, for example, according to a linear law, so as to increase in dependence on the value assumed by the temperature-error parameter A(T).

As can be seen from equation (2) given above, the parameter A(T) depends partly on the instantaneous temperature error $E_i = [T_V - T_T]_i$ and partly on the difference between that error and the value $E_{i-1}$ assumed during the previous calculation cycle.

In fact, the control unit 8 consequently operates a kind of proportional/differential-incremental control of the open time of the solenoid valve 7 in dependence on the temperature error $T_V - T_T$.

By virtue of this characteristic, the instabilities often encountered with prior-art systems are eliminated.

## Claims

1. A system for controlling the heating of the passenger compartment (6) of a motor vehicle, comprising:
   a liquid-air heat-exchanger (1) adapted to receive a flow of heated liquid from the engine cooling system of the vehicle and to transfer heat to an air flow (5) to be admitted to the passenger compartment (6),
   a solenoid valve (7) for controlling the flow of liquid through the heat-exchanger (1),
   setting means (12), which can be operated manually by the user to generate electrical data signals indicative of the desired temperature ($T_R$) of the passenger compartment (6),
   temperature sensor means (11) for supplying electrical signals indicative of the temperature of the heated air output by the exchanger (1), and
   an electronic control unit (8) arranged to pilot the solenoid valve (7) in an ON-OFF mode, in a predetermined manner, in dependence on the desired temperature ($T_R$) and the temperature ($T_T$) detected by the sensor means (11), the electronic unit (8) being arranged in particular:
   to calculate a reference temperature value ($T_V$) for the air output by the heat-exchanger (1) as a predetermined function of the desired temperature ($T_R$) set by the user, and
   to alter the time for which the solenoid valve (7) is opened or closed, in dependence on the difference between the measured temperature ($T_T$) of the air output by the exchanger (1) and the calculated reference temperature value ($T_V$),
   characterised in that the electronic control unit (8) is also arranged:
   to store, for each cycle (i), the difference between the measured temperature ($T_T$) of the air output by the heat-exchanger (1) and the calculated reference temperature ($T_V$),
   to calculate a temperature-error parameter (A) by a predefined linear combination of the values assumed by that difference (E) during the current cycle (i) and during the immediately preceding cycle (i-1), and
   to alter the period for which the solenoid valve (7) is opened ($T_{on}$) or closed, in a predefined manner, in dependence on the temperature-error parameter (A).

2. A system according to Claim 1, characterised in that the temperature sensor means (10, 11) are also adapted to supply signals indicative of the temperature ($T_A$) in the passenger compartment, and in that the control unit (8) is arranged to calculate the reference temperature value ($T_V$) as a predetermined function of the temperature ($T_A$) detected in the passenger compartment and of the desired temperature ($T_R$) set by the user.

3. A system according to Claim 2, characterised in that the temperature sensor means (9, 10, 11) are also adapted to supply signals indicative of the temperature ($T_E$) outside the passenger compartment, and in that the control unit (8) is arranged to calculate the reference temperature value ($T_V$) as a predetermined function of the temperatures ($T_E$, $T_A$) outside and inside the passenger compartment and of the desired temperature ($T_R$) set by the user.

## Patentansprüche

1. Vorrichtung zur Regelung der Beheizung des Fahrgastraumes (6) eines Motorfahrzeuges enthaltend,
   einen Flüssigkeits-Luft-Wärmetauscher (1) angepasst, um einen Strom aufgeheizter Flüssigkeit aus der Motorkühleinrichtung des Fahrzeugs zu erhalten und Wärme auf einen in den Fahrgastraum (6) gelangenden Luftstrom (5) zu übertragen,
   ein Magnetventil (7) zum Steuern des Flüssigkeitsstroms durch den Wärmetauscher (1),
   Einstellelemente (12), die vom Benutzer manuell bedient werden können, um elektrische Datensignale kennzeichnend für die gewünschte Temperatur ($T_R$) im Fahrgastraum (6) zu erzeugen,

Temperaturmeßelemente (11) zur Lieferung elektrischer Signale kennzeichnend für die Temperatur des erhitzten Luftausstoßes aus dem Wärmetauscher (1) und

eine elektronische Regelungseinheit (8) eingerichtet, um das Magnetventil (7) in einem AUF-ZU-Modus in vorgegebener Weise in Abhängigkeit von der gewünschten Temperatur ($T_R$) und der von den Temperaturmeßelementen (11) gemessenen Temperatur ($T_T$) zu steuern, wobei die elektronische Regelungseinheit (8) insbesondere eingerichtet ist:

um einen Referenztemperaturwert ($T_V$) für den Luftausstoß aus dem Wärmetauscher (1) als vorbegebene Funktion der gewünschten, von dem Benutzer festgelegten Temperatur ($T_R$) zu berechnen und

um die Zeit, für die das Magnetventil (7) geöffnet oder geschlossen ist, in Abhängigkeit von der Differenz zwischen der gemessenen Temperatur ($T_T$) des Luftausstoßes aus dem Tauscher (1) und dem errechneten Referenztemperaturwert ($T_V$) zu ändern,

**dadurch gekennzeichnet,**

daß die elektronische Regelungseinheit (8) auch eingerichtet ist,

um für jeden Zyklus (i) die Differenz zwischen der gemessenen Temperatur ($T_T$) des Luftausstoßes aus dem Wärmetauscher (1) und der berechneten Referenztemperatur ($T_V$) zu speichern,

um einen Temperatur-Fehler-Parameter (A) durch eine vorgegebene lineare Verknüpfung der von dieser Differenz (E) während des gerade laufenden Zyklus (i) und während des unmittelbar vorangegangenen Zyklus (i-1) angenommenen Werte zu berechnen und

um die Dauer, für die das Magnetventil (7) geöffnet ($T_{on}$) oder geschlossen ist, in vorgegebener Weise in Abhängigkeit von dem Temperatur-Fehler-Parameter (A) zu ändern.

2. Vorrichtung nach Anspruch 1,
**dadurch gekennzeichnet,**
daß die Temperaturmeßelemente (10, 11) auch angepaßt sind, um Signale kennzeichnend für die Temperatur ($T_A$) im Fahrgastraum zu liefern, und daß die Regelungseinheit (8) eingerichtet ist, um den Referenztemperaturwert ($T_V$) als eine vorgegebene Funktion der im Fahrgastraum ($T_A$) gemessenen Temperatur und der gewünschten, von dem Benutzer eingestellten Temperatur ($T_R$) zu berechnen.

3. Vorrichtung nach Anspruch 2,
**dadurch gekennzeichnet,**

daß die Temperaturmeßelemente (9, 10, 11) auch angepaßt sind, um Signale kennzeichnend für die Temperatur ($T_E$) außerhalb des Fahrgastraums zu liefern, und daß die Regelungseinheit (8) eingerichtet ist, um den Referenztemperaturwert ($T_V$) als eine vorgegebene Funktion der Temperaturen ($T_E$, $T_A$) außerhalb und innerhalb des Fahrgastraumes und der gewünschten, von dem Benutzer vorgegebenen Temperatur ($T_R$) zu berechnen.

## Revendications

1. Système pour commander le chauffage de l'habitacle (6) d'un véhicule à moteur, comprenant:

un échangeur de chaleur liquide-air (1) adapté à recevoir un débit de liquide chauffé du système de refroidissement du moteur du véhicule et à transférer la chaleur à un écoulement d'air (5) devant être admis dans l'habitacle (6),

une électrovanne (7) pour commander le débit de liquide passant dans l'échangeur de chaleur (1),

un moyen de réglage (12) qui peut être actionné manuellement par l'utilisateur pour produire des signaux de données électriques représentatifs de la température souhaitée ($T_R$) de l'habitacle (6),

un moyen détecteur de température (11) pour fournir des signaux électriques représentatifs de la température de l'air chauffé sortant de l'échangeur (1), et

une unité de commande électronique (8) adaptée à piloter l'électrovanne (7) en mode MARCHE-ARRÊT d'une manière prédéterminée, en fonction de la température souhaitée ($T_R$) et de la température ($T_T$) détectée par le moyen détecteur (11), l'unité électronique (8) étant plus particulièrement adaptée à:

calculer une valeur de température de référence ($T_V$) pour l'air sortant de l'échangeur de chaleur (1) de façon à ce qu'elle soit une fonction prédéterminée de la température souhaitée ($T_R$) réglée par l'utilisateur, et

modifier l'instant où l'électrovanne (7) est ouverte ou fermée, en fonction de la différence entre la température mesurée ($T_T$) de l'air sortant de l'échangeur (1) et de la valeur de la température de référence calculée ($T_V$),

caractérisé en ce que l'unité de commande électronique (8) est également adaptée à:

stocker, pour chaque cycle (i), la différence entre la température mesurée ($T_T$) de l'air sortant de l'échangeur de chaleur (1) et la température de référence calculée ($T_V$),

calculer un paramètre d'erreur sur la température (A) par une combinaison linéaire prédéfinie des valeurs prises par cette différence (E) pendant le cycle courant (i) et pendant le cycle immédiatement précédent (i-1), et

        modifier la période pendant laquelle l'électrovanne (7) est ouverte ($T_{on}$) ou fermée, d'une manière prédéfinie, en fonction du paramètre d'erreur sur la température (A).

2. Système selon la revendication 1, caractérisé en ce que les moyens détecteurs de température (10,11) sont également adaptés à fournir des signaux représentatifs de la température ($T_A$) dans l'habitacle, et en ce que l'unité de commande (8) est adaptée à calculer la valeur de la température de référence ($T_V$) de façon à ce qu'elle soit une fonction prédéterminée de la température ($T_A$) détectée dans l'habitacle et de la température souhaitée ($T_R$) réglée par l'utilisateur.

3. Système selon la revendication 2, caractérisé en ce que les moyens détecteurs de température (9,10,11) sont également adaptés à fournir des signaux représentatifs de la température ($T_E$) à l'extérieur de l'habitacle, et en ce que l'unité de commande (8) est adaptée à calculer la valeur de la température de référence ($T_V$) de façon à ce qu'elle soit une fonction prédéterminée des températures ($T_E$, $T_A$) à l'extérieur et à l'intérieur de l'habitacle et de la température souhaitée ($T_R$) réglée par l'utilisateur.

# FIG. 1

HEAT EXCHANGER

$T_{ON}$

$T_R$

$T_T$

$T_E$

$T_A$

PASSENGER COMPARTMENT

CONTROL UNIT

# FIG. 2